# EUROPÄISCHE PATENTANMELDUNG

(11) **EP 1 281 583 A2**
(43) Veröffentlichungstag der Anmeldung: **05.02.2003**
(21) Anmeldenummer: 02012010.1
(22) Anmeldetag: 31.05.2002
(51) Int. Cl.: B60R 21/01

(54) **Betriebsverfahren und Sicherungseinrichtung für die Funktionseinheiten eines Kraftfahrzeugs**

(30) Priorität: 04.08.2001 DE 10138481
(71) Anmelder: DaimlerChrysler AG, 70567 Stuttgart (DE)
(72) Erfinder: Hallitschke, Frank, 85134 Stammham (DE); Kober, Alexander, 85049 Ingolstadt (DE)
(74) Vertreter: Kolb, Georg

(57) **Zusammenfassung**

Verfahren zum Betrieb der Funktionseinheiten eines Kraftfahrzeugs und Sicherungseinrichtung für die Funktionseinheiten eines Kraftfahrzeugs.

Vorgeschlagen wird ein einfaches, kostengünstiges und zuverlässiges Verfahren und eine entsprechende Sicherungseinrichtung zum Verhindern der unbefugten Handhabung sicherheitskritischer Funktionseinheiten, wie z.B. der Türen oder der Fensterheber des Kraftfahrzeugs.

Hierzu wird der Aktivierungszustand der sicherheitskritischen Funktionseinheiten (12,13) des Kraftfahrzeugs in Abhängigkeit der Sitzbelegung der Sitze (5,6,7,15) des Kraftfahrzeugs automatisch vorgegeben.

## Beschreibung

Die Erfindung betrifft ein Verfahren zum Betrieb der Funktionseinheiten eines Kraftfahrzeugs und eine Sicherungseinrichtung für die Funktionseinheiten eines Kraftfahrzeugs.

In Kraftfahrzeugen sind eine Vielzahl von Funktionseinheiten für unterschiedliche Aufgaben vorgesehen, die in verschiedenen Betriebsmodi mit unterschiedlichen Betriebsparametern betrieben werden können. Die Handhabung der Funktionseinheiten kann dabei oftmals über von den Insassen des Kraftfahrzeugs betätigbare und mit dem Kraftfahrzeug fest verbundene Bedienelemente (beispielsweise Griffe, Schalter oder Taster) vorgenommen werden, insbesondere bei den zur Realisierung von Komfortfunktionen oder Einstellfunktionen dienenden Funktionseinheiten. Unter der Vielzahl der Funktionseinheiten sind eine Anzahl von sicherheitskritischen Funktionseinheiten, deren Gebrauch eine potentielle Gefährdung beinhaltet, d.h. deren Bedienung oder Betätigung für die Sicherheit der Fahrzeuginsassen und/oder anderer Verkehrsteilnehmer von Belang ist. Hierbei ist es wichtig, daß das Betreiben dieser sicherheitskritischen Funktionseinheiten oder die Betätigung der Bedienelemente für diese sicherheitskritischen Funktionseinheiten (beispielsweise Bedienelemente zur Betätigung der sicherheitskritischen Funktionseinheiten Fensterheber, Sitzverstellung, Sicherheitsgurte, Zigarettenanzünder oder Fahrzeugtüren) nur von autorisierten Personen vorgenommen werden darf, da bei unbefugtem Betreiben der sicherheitskritischen Funktionseinheiten, insbesondere durch unbefugte Betätigung der Bedienelemente für die sicherheitskritischen Funktionseinheiten (bsp. durch Kinder oder Tiere) oftmals eine Gefährdung der Fahrzeuginsassen oder anderer Verkehrsteilnehmer eintritt; als Beispiele seien hierzu das Einklemmen von Körperteilen (insbesondere bei automatisch ablaufenden Bewegungsvorgängen) oder Gefahrensituationen durch das unbefugte Öffnen von Fahrzeugtüren während der Fahrt oder im Stillstand des Kraftfahrzeugs genannt.

Daher werden für verschiedene Funktionseinheiten des Kraftfahrzeugs (insbesondere für die Türen des Kraftfahrzeugs) bereits Kindersicherungen angeboten, die jedoch vom Bediener des Kraftfahrzeugs manuell aktiviert werden müssen. Nachteilig hierbei ist, daß die Aktivierung der Kindersicherung vom Bediener des Kraftfahrzeugs oftmals vergessen wird und daß es bei aktivierter Kindersicherung einem eigentlich autorisierten Fahrzeuginsassen nicht möglich ist, die entsprechende Funktionseinheit des Kraftfahrzeugs zu benutzen.

Der Erfindung liegt die Aufgabe zugrunde, ein Verfahren zum Betrieb der Funktionseinheiten eines Kraftfahrzeugs und eine Sicherungseinrichtung für die Funktionseinheiten eines Kraftfahrzeugs anzugeben, mit denen eine sicherheitsgefährdende Benutzung von sicherheitskritischen Funktionseinheiten wirksam und auf einfache Weise verhindert wird.

Diese Aufgabe wird erfindungsgemäß durch die Merkmale im Kennzeichen des Patentanspruchs 1 und des Patentanspruchs 10 gelöst.

Vorteilhafte Ausgestaltungen der Erfindung sind Bestandteil der weiteren Patentansprüche.

Erfindungsgemäß wird die Befugnis zum Betreiben der sicherheitskritischen Funktionseinheiten des Kraftfahrzeugs an die Sitzbelegung gekoppelt, indem der Aktivierungszustand der sicherheitskritischen Funktionseinheiten des Kraftfahrzeugs in Abhängigkeit des von der Sitzbelegung abgeleiteten, den Sitzen des Kraftfahrzeugs zugeordneten Gefährdungspotentials automatisch vorgegeben wird. Hierzu werden beim Erreichen eines vorgegebenen Grenzwerts für das Gefährdungspotential, d.h. bei der Belegung eines Fahrzeugsitzes durch einen Fahrzeuginsassen mit hohem Gefährdungspotential (einem Fahrzeuginsassen, von dem mit recht hoher Wahrscheinlichkeit eine Gefährdung ausgehen kann, bsp. einem Kleinkind oder einem Tier) durch mindestens eine Sicherungseinrichtung zumindest die sich in unmittelbarer Nähe dieses Fahrzeugsitzes befindlichen sicherheitskritischen Funktionseinheiten des Kraftfahrzeugs selbst (insbesondere Fahrzeugtüren, Fensterheber oder dgl.) und/oder zumindest die sich in unmittelbarer Nähe dieses Fahrzeugsitzes befindlichen Bedienelemente zum Betreiben von sicherheitskritischen Funktionseinheiten des Kraftfahrzeugs automatisch deaktiviert. Die mindestens eine Sicherungseinrichtung ist hierzu zur Deaktivierung (Verriegelung) oder Aktivierung (Freigabe) dieser sicherheitskritischen Funktionseinheiten und/oder Bedienelemente des Kraftfahrzeugs mit Sensoreinheiten zur Sitzbelegungserkennung verbunden, d.h. das Ausgangssignal der mindestens einen Sicherungseinrichtung wird abhängig vom Ausgangssignal der Sensoreinheiten zur Sitzbelegungserkennung generiert; als Sicherungseinrichtung kann bsp. ein Steuergerät des Kraftfahrzeugs herangezogen werden (bsp. das Türsteuergerät) oder eine für die Betätigung der sicherheitskritischen Funktionseinheiten und/oder Bedienelemente des Kraftfahrzeugs zwingend erforderlichen Komponente und/oder ein elektrisches Schaltelement und/oder ein elektromechanisches Stellelement, bsp. ein von einem Steuergerät angesteuertes (soich bsp. auf dem Steuergerät befindliches) Relais. Für die Sitzbelegungserkennung, d.h. zur Detektion ob und womit ein Sitz des Kraftfahrzeugs belegt ist, können auf optischer Erkennung beruhende Methoden (bsp. mittels einer eine Kamera im Innenraum des Kraftfahrzeugs aufweisenden Sensoreinheit), IR-Strahlung oder Ultraschall einsetzende Verfahren mit Verwendung von entsprechenden Sensoren oder auf Gewichtserkennung beruhende Methoden (bsp. mittels einer eine sich auf dem Sitz befindliche Gewichtsmatte aufweisenden Sensoreinheit) und/oder Vorrichtungen zur Kindersitzerkennung herangezogen werden. Insbesondere kann in Abhängigkeit des Vergleichs der jeweils detektierten Meßgröße (bsp. des Gewichts und der Gewichtsverteilung) mit statistischen Daten eine Klassifizierung der sich auf den Sitzen befindlichen Objekte (Personen, Tiere, Gegenstände) vorgenommen werden. Anhand der Sitzbelegungserkennung (bsp. durch qualitative Erkennung seitens der Sensoreinheit oder durch Vergleich mit mindestens einem Schwellwert) müssen hierbei zumindest folgende Fälle einem Gefährdungspotential zugeordnet werden: der Sitz ist leer (unbesetzt), der Sitz ist von einem autorisierten Fahrzeuginsassen belegt (bsp. falls das von der Sensoreinheit detektierte Gewicht mindestens einen Schwellwert überschreitet), der Sitz ist mit einem Kindersitz oder einer entsprechenden Vorrichtung für Tiere belegt oder der Sitz ist von einem nicht-autorisierten Fahrzeuginsassen belegt (bsp. falls das von der Sensoreinheit detektierte Gewicht mindestens einen Schwellwert unterschreitet). In den letzten beiden Fällen wird dem betreffenden Sitz ein den Grenzwert erreichendes hohes Gefährdungspotential zugeordnet und die mindestens eine Sicherungseinrichtung aktiviert, d.h. die im Rahmen der Sicherheitsmaßnahmen für diesen Sitz einbezogenen sicherheitskritischen Funktionseinheiten und/oder Bedienelemente zum Betreiben der sicherheitskritischen Funktionseinheiten werden deaktiviert; in den ersten beiden Fällen wird dem betreffenden Sitz ein den Grenzwert unterschreitendes geringes Gefährdungspotential zugeordnet und die mindestens eine Sicherungseinrichtung bleibt deaktiviert, d.h. die im Rahmen der Sicherheitsmaßnahmen für diesen Sitz einbezogenen sicherheitskritischen Funktionseinheiten und/oder Bedienelemente zum Betreiben der sicherheitskritischen Funktionseinheiten bleiben aktiviert.

In Abhängigkeit der Belegung der Sitze können beim Vorliegen der Kriterien für die Aktivierung der entsprechenden Sicherungseinrichtung entweder alle für das Betreiben von sicherheitskritischen Funktionseinheiten vorgesehenen Bedienelemente und/oder alle derartigen sicherheitskritischen Funktionseinheiten selbst deaktiviert werden (insbesondere wird dies für den Fall realisiert, daß nur ein Sitz belegt ist und der Grenzwert für das Gefährdungspotential bei diesem Sitz erreicht ist) oder nur diejenigen für das Betreiben von sicherheitskritischen Funktionseinheiten vorgesehenen Bedienelemente und/oder diejenigen derartigen sicherheitskritischen Funktionseinheiten selbst deaktiviert werden, die sich in der (leicht erreichbaren) Nähe des Sitzes bzw. der Sitze befinden, bei denen der Grenzwert für das Gefährdungspotential erreicht ist (insbesondere wird dies für den Fall realisiert, daß mehr als ein Sitz belegt ist und der Grenzwert für das Gefährdungspotential nur bei einem Sitz erreicht ist).

Nach der Aktivierung einer Sicherungseinrichtung werden die sich auf das Gefährdungspotential auswirkenden, die Sitzbelegung betreffenden Änderungen (bsp. in der Gewichtsverteilung der Sitzbelegung) zumindest bis zum nächsten Abschalten des Motors und Abziehen des Zündschlüssels, vorzugsweise jedoch bis zur nächsten nach dem Abschalten des Motors erfolgenden Wiederinbetriebnahme des Kraftfahrzeugs, nicht berücksichtigt, d.h. die entsprechenden Bedienelemente zum Betreiben sicherheitskritischer Funktionseinheiten und/oder die entsprechenden sicherheitskritischen Funktionseinheiten bleiben nach der erfolgten Deaktivierung bis dahin deaktiviert; somit erfolgt bei sich auf das Gefährdungspotential auswirkenden, die Sitzbelegung betreffenden Änderungen (bsp. in der Gewichtsverteilung der Sitzbelegung) während der Fahrt oder im Stillstand des Kraftfahrzeugs (bsp. dadurch, daß ein Kind plötzlich seinen Sitz verläßt oder sich zwei Kinder gemeinsam auf einem Sitz befinden) keine Deaktivierung der Sicherungseinrichtung; eine Ausnahme hiervon ist in Analogie zur Entriegelung der Türen des Kraftfahrzeugs die Deaktivierung der Sicherungseinrichtung und damit die Aktivierung aller sicherheitskritischer Funktionseinheiten und Bedienelemente zum Betreiben sicherheitskritischer Funktionseinheiten bei einem Unfall, wie er insbesondere durch die Detektion einer plötzlichen Krafteinwirkung auf die Karosserie des Kraftfahrzeugs (eines Stoßes auf die Karosserie infolge eines Aufpralls) erkannt wird oder bei einem unmittelbar bevorstehenden Unfall, wie er bsp. durch einen precrash-Sensor erkannt wird.

Für jede sicherheitskritische Funktionseinheit kann eine entsprechende Sicherungseinrichtung vorgesehen werden; denkbar ist auch, daß für mehrere oder alle sicherheitskritischen Funktionseinheiten eine gemeinsame Sicherungseinrichtung vorgesehen wird. Neben der automatischen Aktivierung der entsprechenden Sicherungseinrichtungen kann auch eine manuelle Aktivierung und/oder Deaktivierung mindestens einer Sicherungseinrichtung durch den Bediener des Kraftfahrzeugs vorgesehen werden (bsp. durch Betätigung von Bedienelementen). Weiterhin kann die automatische Aktivierung der Sicherungseinrichtung als spezieller Modus für den Betrieb der sicherheitskritischen Funktionseinheiten vorgegeben werden oder aber (bsp. in einer zentralen Bedieneinheit des Kraftfahrzeugs) vom Bediener ausgewählt werden und somit bsp. nur von solchen Bedienern benutzt werden, bei denen eine Beförderung von Fahrzeuginsassen mit Gefährdungspotential häufiger vorkommt, während ansonsten (insbesondere bei solchen Bedienern, bei denen eine Beförderung von Fahrzeuginsassen mit Gefährdungspotential sehr selten vorkommt) die automatische Aktivierung der Sicherungseinrichtungen unbenutzt bleibt.

Vorteilhafterweise werden die sicherheitskritischen Funktionseinheiten des Kraftfahrzeugs in Abhängigkeit der Sitzbelegung und daher bei bestehendem Bedarf automatisch aktiviert, so daß eine unbefugte Betätigung der sicherheitskritischen Funktionseinheiten unterbunden wird.

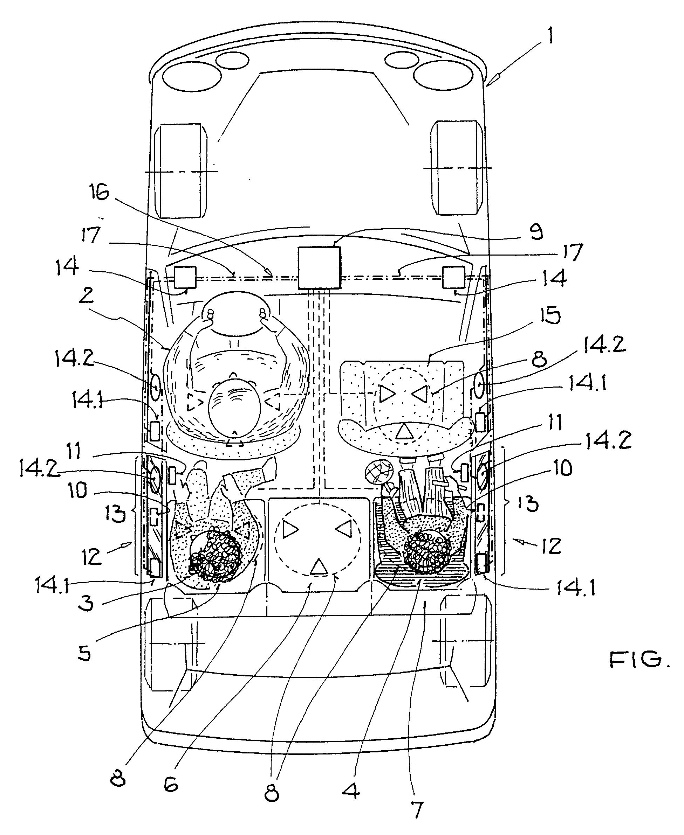

Im Zusammenhang mit der Zeichnung soll die Erfindung weiter erläutert werden. Hierbei zeigt die Figur ein Ausführungsbeispiel mit den für die Sicherung sicherheitskritischer Funktionseinheiten benötigten Komponenten.

Die Sitze des Kraftfahrzeugs 1, insbesondere die Sitze 5, 6, 7 im Fondbereich des Kraftfahrzeugs 1 und der Beifahrersitz 15, sind mit einer eine Sensoreinheit 8 und eine Auswerteeinheit 9 aufweisenden Sitzbelegungserkennung versehen, mit der die Sitzbelegung detektiert wird und deren Ausgangssignal als Entscheidungskriterium für die Aktivierung von Sicherungseinrichtungen 14 (14.1, 14.2) für die über die Türgriffe 11 als Bedienelemente betriebenen Fahrzeugtüren 13 und für die über elektrische Fensterheber 10 als Bedienelemente betriebenen Seitenscheiben 12 als sicherheitskritische Funktionseinheiten des Kraftfahrzeugs verwendet wird.

Durch die Sensoreinheit 8 der Sitzbelegungserkennung wird das auf den Sitzen 5, 6, 7, 15 befindliche Gewicht und die Gewichtsverteilung sowie die Belegung der Sitze 5, 6, 7, 15 mit Kindersitzen 4 oder ähnlichen Vorrichtungen für Tiere detektiert; durch die Auswerteeinheit 9 der Sitzbelegungserkennung wird in Abhängigkeit des detektierten Gewichts und der Gewichtsverteilung die Belegung eines dieser Sitze mit einem Kind erkannt. Die Auswerteeinheit 9 ist bsp. über Busleitungen 17 eines Bussystems 16 mit den Sicherungseinrichtungen 14 verbunden, bsp. mit dem Türsteuergerät 14.1 als Sicherungseinrichtung 14 für die über elektrische Fensterheber 10 als Bedienelemente betriebenen Seitenscheiben 12 des Kraftfahrzeugs 1 und mit dem (elektrischen) Türschloß 14.2 der Fahrzeugtüren 13 als Sicherungseinrichtung 14 für die über die Türgriffe 11 als Bedienelemente betriebenen Fahrzeugtüren 13 des Kraftfahrzeugs 1 (das elektrische Türschloß 14.2 der Fahrzeugtüren 13 besitzt bsp. einen separaten Motor, der bsp. vom Türsteuergerät 14.1 angesteuert wird und den Türinnengriff mechanisch deaktiviert).

Bei einer Nichtbelegung der Sitze mit einem Kind (bsp. ist der Sitz 6 unbesetzt) und bei einer Belegung der Sitze, bei der das Gewicht einen festgelegten Schwellwert (bsp. 180 N) überschreitet, wird von einem geringen, den Grenzwert nicht erreichenden Gefährdungspotential ausgegangen, so daß die entsprechenden Sicherungseinrichtungen 14 (14.1, 14.2) deaktiviert bleiben. Bei einer Belegung der Sitze, bei der das Gewicht einen festgelegten Schwellwert (bsp. 180 N) unterschreitet (bsp. ist der Sitz 5 mit einem Kind 3 besetzt und der Sitz 7 mit einem Kindersitz 4 belegt), wird von einem hohen, den Grenzwert überschreitenden Gefährdungspotential ausgegangen, so daß die entsprechenden Sicherungseinrichtungen 14 (14.1, 14.2) automatisch aktiviert werden, ohne daß der Bediener des Kraftfahrzeugs 1 hierzu tätig werden muß.

## Patentansprüche

1. Verfahren zum Betrieb der Funktionseinheiten eines Kraftfahrzeugs, **dadurch gekennzeichnet, daß** der Aktivierungszustand der sicherheitskritischen Funktionseinheiten (12, 13) des Kraftfahrzeugs (1) in Abhängigkeit der Sitzbelegung der Sitze (5, 6, 7, 15) des Kraftfahrzeugs (1) automatisch vorgegeben wird.

2. Verfahren nach Anspruch 1, **dadurch gekennzeichnet, daß** in Abhängigkeit der Sitzbelegung den Sitzen (5, 6, 7, 15) des Kraftfahrzeugs (1) ein Gefährdungspotential zugeordnet wird, und daß beim Erreichen eines vorgegebenen Grenzwerts für das Gefährdungspotential bei einem Sitz (5; 6; 7; 15) zumindest die zu diesem Sitz (5; 6; 7; 15) benachbarten sicherheitskritischen Funktionseinheiten (12, 13) deaktiviert werden.

3. Verfahren nach Anspruch 1 oder 2, **dadurch gekennzeichnet, daß** mindestens eine sicherheitskritische Funktionseinheit (12; 13) über ein Betätigungselement (10; 11) betrieben wird, und daß beim Erreichen des vorgegebenen Grenzwerts für das Gefährdungspotential bei einem Sitz (5; 6; 7; 15) zumindest die zu diesem Sitz (5; 6; 7; 15) benachbarten Betätigungselemente (10; 11) zum Betreiben sicherheitskritischer Funktionseinheiten (12; 13) deaktiviert werden.

4. Verfahren nach einem der Ansprüche 1 bis 3, **dadurch gekennzeichnet, daß** die Sitzbelegung der Sitze (5, 6, 7, 15) des Kraftfahrzeugs (1) auf optischem Wege detektiert wird.

5. Verfahren nach einem der Ansprüche 1 bis 3, **dadurch gekennzeichnet, daß** die Sitzbelegung der Sitze (5, 6, 7, 15) des Kraftfahrzeugs (1) durch Erfassung der Gewichte und/oder der Gewichtsverteilung auf den Sitzen (5, 6, 7, 15) detektiert wird.

6. Verfahren nach einem der Ansprüche 1 bis 5, **dadurch gekennzeichnet, daß** der Grenzwert für das Gefährdungspotential so vorgegeben wird, daß er bei der Belegung eines Sitzes (7) mit einem Kindersitz (4) und/oder der Belegung eines Sitzes (5) mit einem Kind (3) und/oder der Belegung eines Sitzes mit einem Tier erreicht wird.

7. Verfahren nach einem der Ansprüche 1 bis 6, **dadurch gekennzeichnet, daß** der automatisch vorgegebene Aktivierungszustand der sicherheitskritischen Funktionseinheiten (12, 13) vom Bediener (2) des Kraftfahrzeugs (1) manuell geändert werden kann.

8. Verfahren nach einem der Ansprüche 1 bis 7, **dadurch gekennzeichnet, daß** die automatische Vorgabe des Aktivierungszustands der sicherheitskritischen Funktionseinheiten (12, 13) vom Bediener (2) des Kraftfahrzeugs (1) abgeschaltet werden kann.

9. Verfahren nach einem der Ansprüche 1 bis 8, **dadurch gekennzeichnet, daß** deaktivierte sicherheitskritische Funktionseinheiten (12, 13) im Falle eines Unfalls und/oder eines bevorstehenden Unfalls aktiviert werden.

10. Sicherungseinrichtung für die Funktionseinheiten eines Kraftfahrzeugs, **dadurch gekennzeichnet, daß** für mindestens eine sicherheitskritische Funktionseinheit (12, 13) des Kraftfahrzeugs (1) eine mit einer Sitzbelegungserkennung (8, 9) verbundene Sicherungseinrichtung (14) vorgesehen ist.

11. Sicherungseinrichtung nach Anspruch 10, **dadurch gekennzeichnet, daß** die Sitzbelegungserkennung (8, 9) eine Sensoreinheit (8) und eine Auswerteeinheit (9) zur Auswertung der von der Sensoreinheit (8) detektierten Sitzbelegung aufweist, und daß der Ausgang der Auswerteeinheit (9) mit mindestens einer Sicherungseinrichtung (14) verbunden ist.
